# FASCICULE DE BREVET EUROPEEN

(11) **EP 1 029 718 B1**
(45) Date de publication et mention de la délivrance du brevet: **14.05.2003**
(21) Numéro de dépôt: 00102854.7
(22) Date de dépôt: 11.02.2000
(51) Int. Cl.: B60C 25/14

(54) **Procédé de gonflage d'une enveloppe de pneumatique et dispositif pour la mise en oeuvre de ce procédé**
Verfahren zur Druckluftbefüllung eins Reifens und Gerät zur Realisierung dieses Verfahrens
Method for pressurizing a pneumatic tire and apparatus for executing this method

(30) Priorité: 19.02.1999 FR 9902147
(43) Date de publication de la demande: 23.08.2000
(73) Titulaire: Société de Technologie Michelin, 63040 Clermont-Ferrand Cedex 09 (FR); Michelin Recherche et Technique S.A., 1763 Granges-Paccot (CH)
(72) Inventeur: Schmitt, Ludovic, 63530 Sayat (FR)
(74) Mandataire: Dequire, Philippe Jean-Marie Denis

(56) Documents cités:
- BE-A- 888 537
- US-A- 5 072 765

## Description

La présente invention concerne un procédé de gonflage d'une enveloppe de pneumatique et un dispositif pour la mise en oeuvre de ce procédé. L'invention s'applique au gonflage d'une enveloppe dont les bourrelets sont respectivement destinés à être montés sur des sièges périphériques d'une jante particulière, ce gonflage étant effectué sans utiliser la valve de ladite jante.

La structure de cette jante est décrite en détail dans le document de brevet français FR-A-2 720 977.

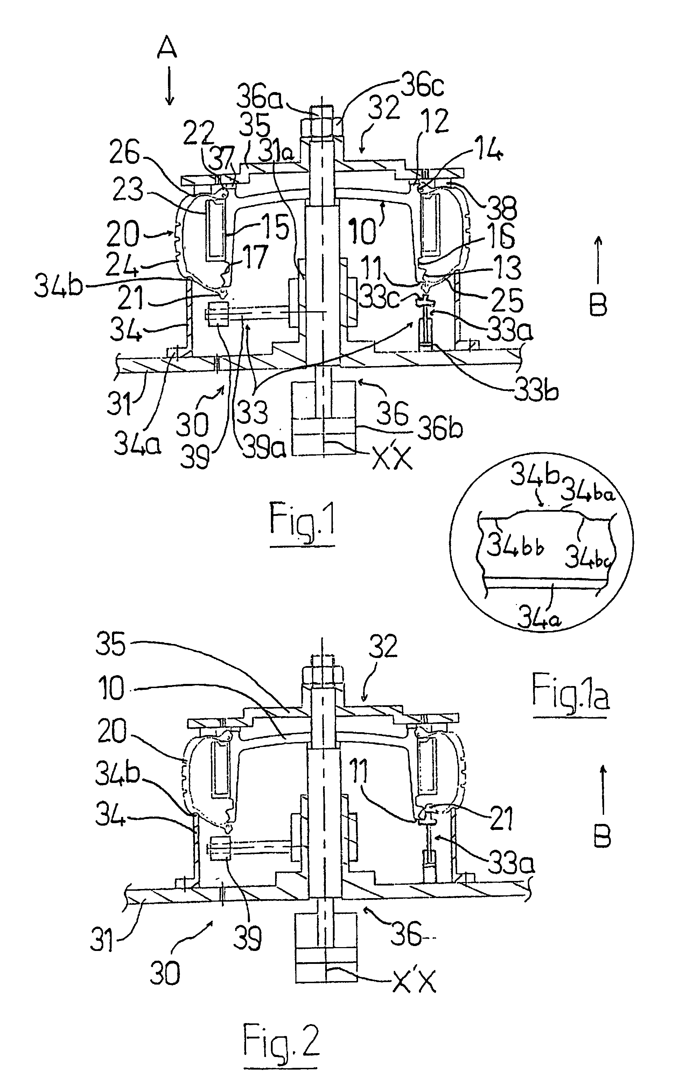

Comme on peut le voir à la Fig. 1 à laquelle il est fait référence ci-après, ladite jante 10 comporte, à partir de ses bords périphériques constitués de deux saillies 11 et 12, un premier et un second sièges 13 et 14 inclinés vers l'extérieur et respectivement destinés à recevoir un premier et un second bourrelets 21 et 22 de l'enveloppe 20. Entre les sièges 13 et 14 est prévue, d'une part, une portée 15 destinée à recevoir un appui de soutien 23 de bande de roulement 24 et, d'autre part, une gorge de montage 16 reliant la portée 15 à un rebord axialement interne 17 dudit premier siège 13.

Dans la suite de la présente description, on appellera par convention premier siège 13 le siège qui est adjacent à la gorge 16, et second siège 14 le siège qui est opposé à ladite gorge 16.

Quant au rebord axialement externe de chaque siège 13, 14, il est formé par la saillie périphérique correspondante 11, 12.

De manière connue, le montage de l'enveloppe 20 sur cette jante particulière 10 s'effectue de la manière suivante.

On présente sur la jante 10 le premier bourrelet 21, du côté du second siège 14, puis on fait glisser ce premier bourrelet 21 axialement sur la portée 15 de manière à l'introduire dans la gorge 16. On monte ensuite le second bourrelet 22 sur le second siège 14.

Puis, dans une étape d'extraction, on extrait le premier bourrelet 21 de la gorge 16 de manière à l'amener axialement contre l'extérieur de la saillie 11 du premier siège 13.

Enfin, dans une étape de montage, on monte ce premier bourrelet 21 sur le premier siège 13.

Parmi les dispositifs de gonflage sans utilisation de valve qui sont connus à ce jour, on peut notamment citer le dispositif décrit dans le document de brevet allemand DE-A-3 411 433, qui comporte une cloche constituée d'un couvercle de section en « U » renversé. Cette cloche est destinée à être montée d'une manière étanche sur l'un des flancs d'une enveloppe qui a été au préalable montée sur les sièges d'une jante et qui repose par son autre flanc à plat sur un support horizontal, cela également d'une manière étanche.

Cette jante comporte lesdits sièges sur sa face interne, et ces sièges sont reliés entre eux par une portion centrale plane se prolongeant par deux décrochements dirigés vers l'intérieur de la jante. Chaque siège est axialement délimité, sur la face intérieure de la jante, par l'un desdits décrochements et par une saillie périphérique qui forme une extrémité axiale de la jante et qui est également dirigée vers l'intérieur de celle-ci, de telle sorte que ces sièges sont symétriques l'un de l'autre par rapport à ladite portion centrale.

Lorsque l'enveloppe est calée entre ledit support et ladite cloche, les bourrelets de l'enveloppe sont ainsi montés sur lesdits sièges.

La cloche est pourvue, dans son espace interne et à proximité de sa paroi latérale, de quatre moyens coulissants et éventuellement pivotants, tels que des leviers, qui sont prévus pour appuyer sur le bourrelet supérieur situé en regard de la cloche, de manière à l'amener vers le bourrelet inférieur et former ainsi un espace annulaire entre ce bourrelet supérieur et la jante, autour de toute la périphérie dudit bourrelet.

Suite à la formation de cet espace, on procède au gonflage de l'enveloppe par injection d'air comprimé à l'intérieur de la cloche et, par conséquent, entre l'enveloppe et la jante via ledit espace. Puis on fait coulisser lesdits moyens d'appui en sens inverse, ce qui a pour effet de repositionner ledit bourrelet supérieur sur le siège correspondant, et l'on cesse l'injection d'air comprimé dans la cloche, de sorte que l'enveloppe est à l'état gonflé.

On peut également citer, parmi les dispositifs de gonflage sans valve, ceux décrits dans le document de brevet allemand DE-A-3 423 307 et dans le document de brevet belge BE-A-888 537, qui se différencient essentiellement du précédent en ce que les moyens d'appui que chacun d'eux comporte sont constitués par la paroi latérale cylindrique elle-même de la cloche correspondante, qui est prévue pour pouvoir coulisser axialement, c'est-à-dire parallèlement à l'axe de révolution de l'enveloppe.

US-A- 5 072 765 montre un dispositif de gonflage à utiliser dans un procédé tel que celui présenté dans le préambule de la revendication 1.

Un inconvénient majeur de ces dispositifs de gonflage connus est qu'ils ne sont pas adaptés au gonflage d'une enveloppe montée sur une jante telle que la jante particulière décrite dans le document de brevet français précité FR-A-2 720 977. En effet, une fois ledit premier bourrelet de l'enveloppe monté sur ledit premier siège de cette jante particulière, le rebord axialement interne de ce premier siège et l'inclinaison précitée de ce dernier vers l'extérieur feraient obstacle à la déformation circonférentielle de ce premier bourrelet vers ledit second bourrelet, pour la création dudit espace annulaire.

Le but de la présente invention est de proposer un procédé de gonflage d'une enveloppe de pneumatique et un dispositif pour la mise en oeuvre de ce procédé, qui permettent dans de bonnes conditions et en un temps réduit le gonflage d'une enveloppe en relation avec ladite jante particulière, ainsi définies:
cette enveloppe comporte des bourrelets respectivement destinés à être montés sur des sièges d'une jante, entre lesdits sièges étant prévue, d'une part, une portée destinée à recevoir un appui de soutien de bande de roulement et, d'autre part, une gorge de montage reliant ladite portée à un rebord axialement interne de l'un desdits sièges, ou premier siège, chaque siège étant pourvu axialement à l'extérieur d'une saillie périphérique.

Le procédé de gonflage selon l'invention consiste à former une enceinte étanche à l'air dont une partie de paroi est formée par ladite enveloppe et à l'intérieur de laquelle sont enfermés ladite jante et lesdits bourrelets, puis à former à l'intérieur de ladite enceinte un orifice de gonflage entre ledit premier siège et l'un desdits bourrelets, ou premier bourrelet, puis à introduire par ladite enceinte de l'air comprimé dans ledit orifice de gonflage, puis à fermer ledit orifice au terme du gonflage de sorte que ladite enveloppe soit gonflée et montée d'une manière étanche sur ladite jante.

Selon l'invention, ledit procédé de gonflage est caractérisé en ce qu'il consiste, avant de former ledit orifice de gonflage, à utiliser ladite enveloppe de telle manière que ledit premier bourrelet occupe une position d'extraction où il se trouve axialement à l'extérieur dudit premier siège et que l'autre bourrelet, ou second bourrelet, soit monté d'une manière étanche à l'air sur l'autre siège, ou second siège, puis, pour former ledit orifice de gonflage, à appuyer à l'intérieur de ladite enceinte sur un emplacement ponctuel de la circonférence dudit premier bourrelet, puis, pour fermer ledit orifice, à cesser d'appuyer sur ledit emplacement ponctuel.

Un dispositif selon l'invention pour la mise en oeuvre dudit procédé comporte une cloche destinée à être alimentée en air comprimé et constituée d'une partie fixe et d'une partie mobile prévue pour coulisser en regard de la précédente, lesdites parties étant respectivement destinées à enserrer d'une manière étanche les flancs de ladite enveloppe pourvue de ladite jante en vue de son gonflage.

Selon l'invention, ledit dispositif est caractérisé en ce qu'il comporte, à l'intérieur de ladite cloche, un doigt qui est destiné à exercer ponctuellement une force axiale sur ledit premier bourrelet par l'intermédiaire de son extrémité libre, en vue de former un orifice de gonflage entre ledit premier bourrelet et ledit premier siège de jante.

Selon une autre caractéristique de l'invention, ledit dispositif de gonflage est tel que ledit doigt est monté mobile du côté de ladite partie fixe et en translation parallèlement à l'axe de coulissement de ladite partie mobile, sous la commande d'un élément de commande, tel qu'un vérin.

De préférence, ledit doigt présente en retrait de son extrémité libre un épaulement, qui est destiné à appuyer sur la face externe de ladite saillie périphérique de la jante, de telle sorte que l'amplitude maximale de ladite translation soit prédéterminée.

De préférence, ladite partie fixe présente une géométrie de révolution qui est concentrique audit axe de coulissement de ladite partie mobile, et elle est destinée à appuyer par son bord périphérique sur une zone circulaire dudit flanc.

Avantageusement, ledit bord périphérique de ladite partie fixe présente, sur un arc de sa circonférence, une portion prolongeant légèrement ledit bord par des décrochements au-delà du reste de ladite circonférence, en direction de ladite partie mobile.

Dans ce cas, ledit doigt est prévu dans un secteur angulaire délimité par un dièdre ayant pour arête ledit axe et dont les faces passent respectivement par lesdits décrochements.

Selon une autre caractéristique de l'invention, ladite partie mobile est pourvue de deux cales annulaires et concentriques, qui sont respectivement destinées à appuyer sur la jante et sur l'enveloppe.

De cette manière, ladite partie fixe peut enserrer ladite enveloppe d'une manière étanche.

Selon une autre caractéristique de l'invention, ledit dispositif de gonflage comporte, à l'intérieur de ladite cloche un galet de montage qui est destiné à appuyer sur au moins un arc de circonférence dudit premier bourrelet, au terme dudit gonflage, de sorte à le monter sur ledit premier siège.

Selon un exemple de réalisation, ledit galet de montage est monté à l'extrémité libre d'un bras qui est mobile en rotation plane autour dudit axe, à diverses hauteurs par rapport audit axe.

Les caractéristiques précitées de la présente invention, ainsi que d'autres, seront mieux comprises à la lecture de la description suivante d'un exemple de réalisation de l'invention, donné à titre illustratif et non limitatif, ladite description étant réalisée en relation avec les dessins joints, parmi lesquels:
la Fig. 1 est une vue en coupe schématique d'un dispositif de gonflage selon l'invention dans une première phase du procédé correspondant,
la Fig. 1a est un médaillon représentant en élévation un détail du dispositif de la Fig. 1,
la Fig. 2 est une vue en coupe schématique dudit dispositif de gonflage dans une seconde phase dudit procédé,
la Fig. 3 est une vue en coupe schématique dudit dispositif de gonflage dans une troisième phase dudit procédé et
la Fig. 4 est une vue en coupe schématique dudit dispositif de gonflage dans une quatrième phase dudit procédé.

Comme cela est visible à la Fig. 1, un dispositif de gonflage 30 selon l'invention comporte un bâti 31, une cloche 32 qui est montée sur le bâti 31 et qui est destinée à coopérer avec l'enveloppe 20 et la jante particulière 10, et des moyens 33 qui sont montés à l'intérieur de la cloche 32 et qui sont destinés à coopérer avec le premier bourrelet 21 de l'enveloppe 20.

La paroi du bâti 31 est pourvue d'une entrée d'air (non représentée) qui est reliée d'une manière étanche à un système d'alimentation en air comprimé.

Dans cet exemple de réalisation, la cloche 32 est constituée d'une partie fixe 34 qui est montée sur le bâti 31 et d'une partie mobile 35 qui est prévue pour coulisser en regard de la précédente par l'intermédiaire d'un moyen de commande 36.

Ces parties 34 et 35 sont respectivement destinées à enserrer d'une manière étanche les flancs 25 et 26 de l'enveloppe 20 en vue de son gonflage, lorsque celle-ci est pourvue de ladite jante 10.

La partie fixe 34 présente une géométrie de révolution, par exemple de forme cylindrique prolongée à angle droit par une embase 34a, pour sa fixation sur le bâti 31.

De préférence, le bord périphérique 34b de cette partie fixe 34 qui est distal de ladite embase 34a présente, sur un arc réduit de sa circonférence, une portion 34ba prolongeant légèrement ledit bord 34b au-delà du reste de ladite circonférence en direction de ladite partie mobile 35 (voir le médaillon de la Fig. 1a). On voit sur cette Fig. 1a que cette portion 34ba peut présenter une forme sensiblement plane, et qu'elle est par exemple reliée au reste de la circonférence 34bb par deux décrochements 34bc symétriques l'un de l'autre et plus ou moins incurvés.

La partie mobile 35 est destinée à exercer, par l'intermédiaire de la partie fixe 34, une force de serrage axiale sur l'enveloppe 20 et sur la jante 10 (voir flèche A), dont l'intensité de serrage est commandée par le moyen de commande 36. Cette partie 35 présente une paroi globalement perpendiculaire à celle de la partie fixe 34 et, dans cet exemple de réalisation, elle est montée coulissante en son axe de symétrie X'X sur ledit moyen de commande 36 (on peut voir à la Fig. 1 que la partie fixe 34 est concentrique audit axe X'X).

Ce moyen 36 est ici constitué d'un vérin, dont la tige 36a peut être guidée dans les deux sens à l'intérieur d'un manchon 31a prolongeant du côté de la partie fixe 34 le bord d'une ouverture que présente le bâti 31, et dont le fût 36b est prévu de l'autre côté dudit bâti 31. La tige 36a du vérin 36 est pourvue d'un élément 36c, tel qu'un boulon, qui est prévu pour la verrouiller à une course donnée.

La partie mobile 35 est pourvue, à proximité de la périphérie de sa face en regard de la partie fixe 34, de deux cales 37 et 38 annulaires, concentriques et de sections par exemple rectangulaires, qui sont respectivement destinées à appuyer sur la jante 10 et sur l'enveloppe 20. Plus précisément, la cale 37 associée à la jante 10 est destinée à appuyer sur la face externe de la saillie périphérique 11 de ladite jante 10. Quant à la cale 38 associée à l'enveloppe 20, elle est, d'une part, située entre ladite cale 37 et la périphérie de la partie mobile 35 et, d'autre part, elle prolonge ladite partie mobile 35 en direction de la partie fixe 34 légèrement au-delà de la cale 37, de sorte à pouvoir appuyer sur le flanc 26 de l'enveloppe 20 se terminant par le second bourrelet 22.

Les moyens 33 destinés à coopérer avec le premier bourrelet 21 de l'enveloppe 20 sont constitués, d'une part, d'un doigt 33a qui est destiné à exercer ponctuellement une force axiale sur le premier bourrelet 21 par l'intermédiaire de son extrémité libre (voir flèche B) en vue de former un orifice de gonflage pour l'enveloppe 20 et, d'autre part, d'un galet de montage 39 qui est destiné à appuyer sur au moins un arc de circonférence dudit premier bourrelet 21, au terme dudit gonflage.

Dans l'exemple de la Fig. 1, le doigt 33a est mobile dans les deux sens en translation parallèlement à l'axe X'X, sous la commande d'un élément de commande 33b, tel qu'un second vérin qui est monté sur le bâti 31. Ce doigt 33a présente avantageusement un épaulement 33c, en retrait de son extrémité libre. Cet épaulement 33c est destiné à appuyer sur la face externe de la saillie périphérique 12 de la jante 10, de telle sorte que la course maximale dudit second vérin et, par conséquent, l'amplitude maximale de ladite translation soient prédéterminées.

Dans le cas où le bord périphérique 34b de la partie fixe 34 présente le décrochement précité sur un arc de circonférence en relation avec la Fig. 1a, on notera que le doigt 33a est alors prévu dans le secteur angulaire délimité par un dièdre ayant pour arête l'axe X'X et dont les faces passent respectivement par lesdits décrochements 34bc.

Quant au galet de montage 39, il est monté à l'extrémité libre d'un bras 39a qui est mobile en rotation plane autour de l'axe X'X, et à diverses hauteurs par rapport audit axe X'X.

Avantageusement, on notera que l'espace interne de la cloche 32 à l'extérieur duquel la jante 10 pourvue de l'enveloppe 20 est destinée à être montée peut être partiellement occupé, en vue de réduire le volume d'air nécessaire au gonflage de ladite enveloppe 20. Selon un exemple de réalisation, on peut utiliser à cet effet un élément de révolution et de structure annulaire (non représenté) qui est monté sur le bâti 31, d'une manière centrée sur l'axe X'X.

Un dispositif de gonflage 30 selon la présente invention fonctionne de la manière suivante.

Dans une première étape dont le résultat est illustré à la Fig. 1, on dispose la jante 10 solidairement pourvue de l'enveloppe 20 en position d'extraction, à plat sur la partie fixe 34 de la cloche 32 et d'un côté prédéterminé.

Plus précisément, cette disposition à plat est telle que l'axe de révolution commun à l'enveloppe 20 et à la jante 10 est confondu avec ledit axe de symétrie X'X du dispositif 30.

Quant à cette position d'extraction, elle a été obtenue au terme de ladite étape d'extraction décrite ci-dessus, et elle est telle que le premier bourrelet 21 de l'enveloppe se situe axialement à l'extérieur de la saillie 11 du premier siège 13, le second bourrelet 22 étant quant à lui monté sur le second siège 14. Dans cette position, le premier bourrelet 21 appuie d'une manière quasi étanche sur ladite saillie 11.

Concernant ledit côté prédéterminé de disposition à plat sur la partie fixe 34, il s'agit du côté de l'enveloppe 20 qui comporte le premier bourrelet 21 en position d'extraction.

Comme on peut le voir à la Fig. 1, l'enveloppe 20 est alors montée sur le bord périphérique 34b de la partie fixe 34 par l'intermédiaire d'une zone circulaire de son flanc 25.

On notera que la mise en oeuvre de cette première étape requiert, d'une part, que la partie mobile 35 de la cloche 32 occupe une position suffisamment distante dudit bord 34b en regard de ce dernier et, d'autre part, que les moyens 33 destinés à coopérer avec le premier bourrelet 21 occupent des positions suffisamment distantes dudit bord 34b en s'éloignant de ladite partie mobile 35.

Dans une seconde étape dont le résultat est également illustré à la Fig. 1, on actionne d'abord l'élément 36c de manière à former une butée pour la partie mobile 35. Puis on commande le rapprochement de ladite partie mobile 35 par l'intermédiaire du moyen 36 jusqu'à l'obtention d'une position déterminée de celle-ci sur l'axe X'X, de telle manière que les cales 37 et 38 de ladite partie mobile 35 appuient alors respectivement sur la face externe de la saillie périphérique 11 de ladite jante 10 et sur ledit flanc 26 de l'enveloppe 20

Plus précisément, on fait alors en sorte que l'une au moins des cales 37 et 38 appuie d'une manière étanche sur la jante 10 ou sur l'enveloppe 20. A titre préférentiel, cette étanchéité est réalisée par ladite cale 37 sur la jante 10.

On a ainsi formé une enceinte 20,32 étanche à l'air dont une partie de paroi est formée par l'enveloppe 20 et à l'intérieur de laquelle sont enfermés la jante et les bourrelets 21 et 22.

Dans une troisième étape dont le résultat est illustré à la Fig. 2, on commande ensuite la translation du doigt 33a dans le sens de la flèche B jusqu'à ce que son extrémité libre appuie sur le premier bourrelet 21, de sorte à amener ce dernier radialement vers l'extérieur et axialement vers l'intérieur de la saillie 11 et à former ainsi ledit orifice de gonflage entre la jante 10 et l'enveloppe 20.

On procède alors à l'injection d'air comprimé à l'intérieur de la cloche 32, ce qui a pour effet d'introduire cet air entre l'enveloppe 20 et la jante 10, par ledit orifice.

On notera que le décrochement préférentiel du bord périphérique 34b en ladite portion 34ba permet, en appuyant sur un arc de circonférence du flanc 25 adjacent au premier bourrelet 21, de faciliter la formation de cet orifice pour optimiser le gonflage ultérieur.

Des essais ont montré que l'action du doigt 33a sur le premier bourrelet 21 permet de faire croître la pression d'air entre l'enveloppe 20 et la jante 10 pratiquement à l'identique que dans l'espace interne restant de la cloche 32, ce qui minimise tout retour d'air comprimé hors dudit orifice.

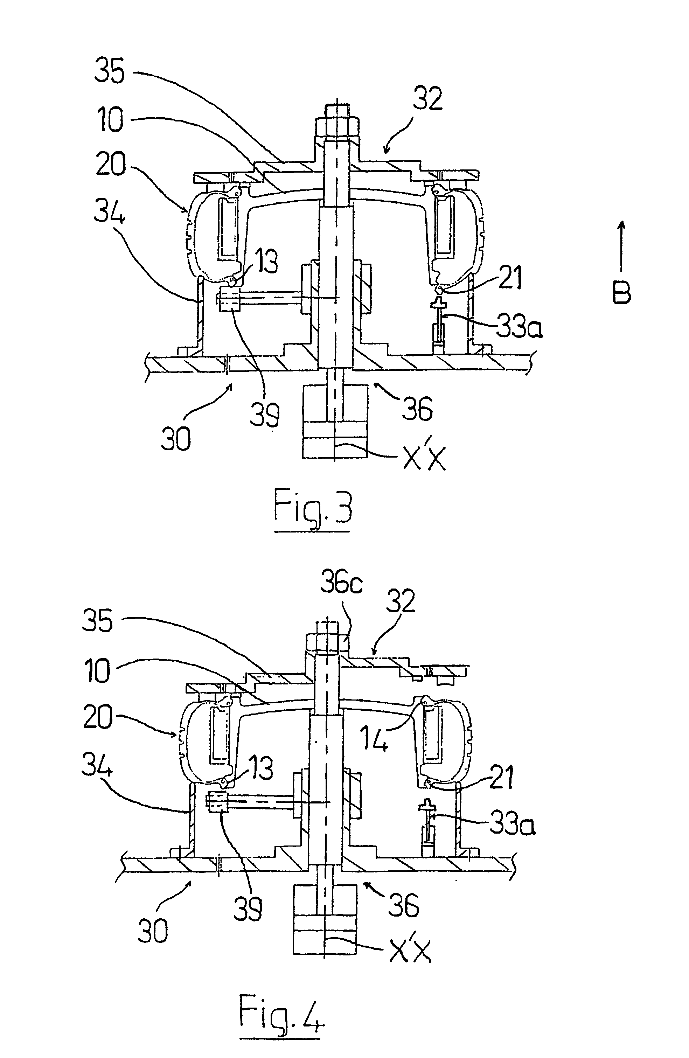

Dans une quatrième étape dont une phase initiale est illustrée à la Fig. 3, on commande la translation du doigt 33a dans le sens inverse à celui de la flèche B, jusqu'à ce qu'il occupe une position de retrait analogue à celle de la Fig. 1, où il n'appuie plus sur le bourrelet 21. Cela a pour effet de fermer ledit orifice de gonflage et, par conséquent, de maintenir l'air comprimé entre la jante 10 et l'enveloppe 20.

On cesse alors l'injection d'air comprimé à l'intérieur de la cloche 32, et l'on actionne le galet 39 en translation de manière à lui faire prendre une position initiale de montage (voir Fig. 3) où il appuie localement sur le premier bourrelet 21 en regard, de sorte à monter localement celui-ci sur le siège 13 correspondant.

On notera que, dans le mode préférentiel de réalisation où la partie fixe 34 présente le décrochement précité, ladite position initiale de montage dudit galet 39 est telle que ce dernier se trouve alors à l'intérieur du secteur angulaire délimité par le dièdre précité, à l'instar du doigt 33a.

Dans une cinquième étape (voir Fig. 4), on actionne en rotation autour de l'axe X'X le galet de montage 39 sur un trajet donné, dans ladite position de montage.

L'expérience montre que la rotation du galet 39 dans cette position de montage sur un trajet égal ou légèrement inférieur à un tour est suffisante pour monter d'une manière parfaitement étanche le premier bourrelet 21 sur le siège 13 destiné à le recevoir.

De cette manière, l'enveloppe 20 est montée d'une manière étanche sur la jante 10, tout en étant gonflée. Ce résultat est illustré sur la moitié gauche de la Fig. 4, où l'on voit également qu'après avoir commandé l'arrêt de la rotation du galet 39, on l'a actionné en translation de manière qu'il retrouve sur l'axe X'X sa hauteur initiale de retrait par rapport au bourrelet 21.

On fait ensuite sortir de la cloche 32 l'air comprimé qu'elle contient. On notera que cela n'influe pas sur l'état de gonflage de l'enveloppe 20, du fait de son montage étanche sur la jante 10.

La moitié droite de la Fig. 4 illustre le retrait de la partie mobile 35 de la cloche 32, en vue de l'extraction du dispositif 30 l'ensemble monté à l'état gonflé de l'enveloppe 20 sur la jante 10.

De préférence, on procède à ce retrait de la partie mobile 35 en deux temps, par l'intermédiaire du moyen de commande 36 et en déverrouillant l'élément 36c.

Dans un premier temps, on éloigne lentement cette partie 35 de l'ensemble monté 10, 20 sur quelques millimètres seulement, de sorte à relâcher progressivement la force exercée par celle-ci. Dans un second temps, on peut éloigner d'un coup la partie mobile 35 de l'ensemble monté 10, 20, d'une hauteur permettant l'extraction de ce dernier.

On notera que le desserrement initial inhérent à ce premier temps de retrait permet de supprimer le risque de glissement des bourrelets hors des sièges correspondants 13 et 14, qui aurait pu exister dans le cas d'un retrait brusque réalisé en un seul temps.

On notera également qu'un dispositif de gonflage 30 selon la présente invention permet le gonflage d'une enveloppe 20 se trouvant à l'état non monté sur la jante 10 ainsi que, au terme de ce gonflage, le montage de ladite enveloppe 20 sur ladite jante 10.

## Revendications

1. Procédé de gonflage d'une enveloppe de pneumatique (20) comportant des bourrelets (21 et 22) respectivement destinés à être montés sur des sièges (13 et 14) d'une jante (10), ledit procédé consistant à former une enceinte (20, 32) étanche à l'air dont une partie de paroi est formée par ladite enveloppe (20) et à l'intérieur de laquelle sont enfermés ladite jante (10) et lesdits bourrelets (21 et 22), puis à former à l'intérieur de ladite enceinte (20, 32) un orifice de gonflage entre ledit premier siège (13) et l'un desdits bourrelets, ou premier bourrelet (21), puis à introduire par ladite enceinte (20, 32) de l'air comprimé dans ledit orifice de gonflage, puis à fermer ledit orifice au terme du gonflage de sorte que ladite enveloppe (20) soit gonflée et montée d'une manière étanche sur ladite jante (10),
**caractérisé en ce qu'**entre lesdits sièges (13 et 14) il est prévu, d'une part, une portée (15) destinée à recevoir un appui de soutien (23) de bande de roulement (24) et, d'autre part, une gorge de montage (16) reliant ladite portée (15) à un rebord axialement interne (17) de l'un desdits sièges, ou premier siège (13), chaque siège (13, 14) étant pourvu axialement à l'extérieur d'une saillie périphérique (11, 12), ledit procédé consistant, avant de former ledit orifice de gonflage, à utiliser ladite enveloppe (20) de telle manière que ledit premier bourrelet (21) occupe une position d'extraction où il se trouve axialement à l'extérieur dudit premier siège (13) et que l'autre bourrelet, ou second bourrelet (22), soit monté d'une manière étanche à l'air sur l'autre siège, ou second siège (14), puis, pour former ledit orifice de gonflage, à appuyer à l'intérieur de ladite enceinte (20, 32) sur un emplacement ponctuel de la circonférence dudit premier bourrelet (21), puis, pour fermer ledit orifice, à cesser d'appuyer sur ledit emplacement ponctuel.

2. Dispositif de gonflage (30) d'une enveloppe de pneumatique (20) pour la mise en oeuvre du procédé selon la revendication 1, ledit dispositif (30) comportant une cloche (32) destinée à être alimentée en air comprimé et constituée d'une partie fixe (34) et d'une partie mobile (35) prévue pour coulisser en regard de la précédente, lesdites parties (34 et 35) étant respectivement destinées à enserrer d'une manière étanche les flancs (25 et 26) de ladite enveloppe (20) pourvue de ladite jante (10) en vue de son gonflage,
**caractérisé en ce qu'**il comporte, à l'intérieur de ladite cloche (32), un doigt (33a) qui est destiné à exercer ponctuellement une force axiale sur ledit premier bourrelet (21) par l'intermédiaire de son extrémité libre, en vue de former un orifice de gonflage entre ledit premier bourrelet (21) et ledit premier siège de jante (13).

3. Dispositif de gonflage (30) selon la revendication 2, **caractérisé en ce que** ledit doigt (33a) est monté mobile du côté de ladite partie fixe (34) et en translation parallèlement à l'axe de coulissement (X'X) de ladite partie mobile (35), sous la commande d'un élément de commande (33b), tel qu'un vérin.

4. Dispositif de gonflage (30) selon la revendication 3, **caractérisé en ce que** ledit doigt (33a) présente en retrait de son extrémité libre un épaulement (33c), qui est destiné à appuyer sur la face externe de ladite saillie périphérique (12) de la jante (10), de telle sorte que l'amplitude maximale de ladite translation soit prédéterminée.

5. Dispositif de gonflage (30) selon une des revendications 2 à 4, **caractérisé en ce que** ladite partie fixe (34) présente une géométrie de révolution qui est concentrique audit axe de coulissement (X'X) de ladite partie mobile (35), et **en ce qu'**elle est destinée à appuyer par son bord périphérique (34b) sur une zone circulaire dudit flanc (25).

6. Dispositif de gonflage (30) selon la revendication 5, **caractérisé en ce que** ledit bord périphérique (34b) de ladite partie fixe (34) présente, sur un arc de sa circonférence, une portion (34ba) prolongeant légèrement ledit bord (34b) par des décrochements (34bc) au-delà du reste de ladite circonférence, en direction de ladite partie mobile (35).

7. Dispositif de gonflage (30) selon la revendication 6, **caractérisé en ce que** ledit doigt (33a) est prévu dans un secteur angulaire délimité par un dièdre ayant pour arête ledit axe (X'X) et dont les faces passent respectivement par lesdits décrochements (34bc).

8. Dispositif de gonflage (30) selon une des revendications 2 à 7, **caractérisé en ce que** ladite partie mobile (35) est pourvue de deux cales (37 et 38) annulaires et concentriques, qui sont respectivement destinées à appuyer sur ladite jante (10) et sur ladite enveloppe (20).

9. Dispositif de gonflage (30) selon une des revendications 2 à 8, **caractérisé en ce qu'**il comporte, à l'intérieur de ladite cloche (32), un galet de montage (39) qui est destiné à appuyer sur au moins un arc de circonférence dudit premier bourrelet (21), au terme dudit gonflage, de sorte à le monter sur ledit premier siège (13).

10. Dispositif de gonflage (30) selon la revendication 9, **caractérisé en ce que** ledit galet de montage (39) est monté à l'extrémité libre d'un bras (39a) qui est mobile en rotation plane autour dudit axe (X'X), à diverses hauteurs par rapport audit axe (X'X).

## Claims

1. A process for inflating a tyre (20) comprising beads (21 and 22) intended respectively to be mounted on seats (13 and 14) of a rim (10), said process consisting in forming an airtight enclosure (20, 32), part of the wall of which is formed by said tyre (20) and within which there are enclosed said rim (10) and said beads (21 and 22), then in forming within said enclosure (20, 32) an inflation orifice between said first seat (13) and one of said beads, or first bead (21), then in introducing compressed air into said inflation orifice via said enclosure (20, 32), then in closing said orifice at the end of the inflation such that said tyre (20) is inflated and mounted hermetically on said rim (10),
**characterised in that** there is provided between said seats (13 and 14) firstly a bearing surface (15) intended to receive a bearing support (23) for a tread (24) and, secondly, a mounting groove (16) connecting said bearing surface (15) to an axially inner flange (17) of one of said seats, or first seat (13), each seat (13, 14) being provided axially to the outside with a peripheral projection (11, 12), said process consisting, before forming said inflation orifice, in using said tyre (20) such that said first bead (21) occupies an extraction position in which it is axially to the outside of said first seat (13) and that the other bead, or second bead (22), is mounted in airtight manner on the other seat, or second seat (14), then, for forming said inflation orifice, pressing within said enclosure (20, 32) on a pinpoint location of the circumference of said first bead (21), then, for closing said orifice, ceasing pressure on said pinpoint location.

2. An inflation device (30) for a tyre (20) for implementing the process according to Claim 1, said device (30) comprising a bell (32) intended to be supplied with compressed air and formed of a fixed part (34) and a mobile part (35) intended to slide relative to the former, said parts (34 and 35) being intended, respectively, to surround tightly in hermetic manner the sidewalls (25 and 26) of said tyre (20) which is provided with said rim (10) for its inflation,
**characterised in that** it comprises, within said bell (32), a finger (33a) which is intended to exert an axial force at points on said first bead (21) by means of its free end, in order to form an inflation orifice between said first bead (21) and said first rim seat (13).

3. An inflation device (30) according to Claim 2, **characterised in that** said finger (33a) is mounted to be mobile on the side of said fixed part (34) and in translation parallel to the axis (X'X) of sliding of said mobile part (35), under the control of a control element (33b), such as a piston-cylinder unit.

4. An inflation device (30) according to Claim 3, **characterised in that** said finger (33a) has set back from its free end a shoulder (33c), which is intended to bear on the outer face of said peripheral projection (12) of the rim (10), such that the maximum amplitude of said translation is predetermined.

5. An inflation device (30) according to one of Claims 2 to 4, **characterised in that** said fixed part (34) has a geometry of revolution which is concentric to said axis (X'X) of sliding of said mobile part (35), and **in that** it is intended to bear with its peripheral edge (34b) on a circular zone of said sidewall (25).

6. An inflation device (30) according to Claim 5, **characterised in that** said peripheral edge (34b) of said fixed part (34) has, on an arc of its circumference, a portion (34ba) slightly extending said ridge (34b) by kinked sections (34bc) beyond the remainder of said circumference, in the direction of said mobile part (35).

7. An inflation device (30) according to Claim 6, **characterised in that** said finger (33a) is provided in an angular sector defined by a dihedron having said axis (X'X) as its edge and the faces of which pass respectively through said kinked sections (34bc).

8. An inflation device (30) according to one of Claims 2 to 7, **characterised in that** said mobile part (35) is provided with two annular, concentric wedges (37 and 38) which are intended respectively to bear on said rim (10) and on said tyre (20).

9. An inflation device (30) according to one of Claims 2 to 8, **characterised in that** it comprises, within said bell (32), a mounting roller (39) which is intended to bear on at least one arc of the circumference of said first bead (21), at the end of said inflation, so as to mount it on said first seat (13).

10. An inflation device (30) according to Claim 9, **characterised in that** said mounting roller (39) is mounted on the free end of an arm (39a) which is mobile in planar rotation about said axis (X'X), at various heights relative to said axis (X'X).

## Patentansprüche

1. Verfahren zum Aufpumpen eines Reifenmantels (20), der Wülste (21 und 22) aufweist, die jeweils dazu bestimmt sind, auf Sitzen (13 und 14) einer Felge (10) montiert zu werden, wobei das genannte Verfahren darin besteht, daß man eine luftdichte Einfassung (20, 32) bildet, bei der ein Teil der Wand vom genannten Mantel (20) gebildet ist, und in deren Innerem die genannte Felge (10) und die genannten Wülste (21 und 22) eingeschlossen sind, man dann im Inneren der genannten Einfassung (20, 32) eine Aufpumpöffnung zwischen dem genannten ersten Sitz (13) und dem einen der genannten Wülste oder dem ersten Wulst (21) bildet, dann durch die genannte Umhüllung (20, 32) Druckluft in die genannte Aufpumpöffnung einbringt, und dann die genannte Öffnung bei Beendigung des Aufpumpens derart schließt, daß der genannte Mantel (20) aufgepumpt und auf der genannten Felge (10) dicht montiert ist, **dadurch gekennzeichnet, daß** zwischen den genannten Sitzen (13 und 14) einerseits ein Bereich (15), der zur Aufnahme einer Auflageunterstützung (23) für die Lauffläche (24) bestimmt ist, und andererseits eine Montagenut (16) vorgesehen ist, die den genannten Bereich (15) mit einem axial inneren Randumschlag (17) des einen der genannten Sitze oder des ersten Sitzes (13) verbindet, wobei jeder Sitz (13, 14) axial auf der Außenseite mit einem sich in Umfangsrichtung erstreckenden Vorsprung (11, 12) versehen ist und das genannte Verfahren darin besteht, daß man vor dem Bilden der genannten Aufpumpöffnung den genannten Mantel (20) derart verwendet, daß der genannte, erste Wulst (21) eine Ausziehlage einnimmt, in der er sich axial auf der Außenseite des genannten, ersten Sitzes (13) befindet, und daß der andere Wulst oder zweite Wulst (22) luftdicht auf dem anderen Sitz oder zweiten Sitz (14) montiert ist, man dann, um die genannte Aufpumpöffnung zu bilden, sich auf der Innenseite der genannten Einfassung (20, 32) auf eine punktförmige Stelle des Umfangs des genannten, ersten Wulstes (21) stützt, und man dann, um die genannte Öffnung zu schließen, es einstellt, sich auf die genannte, punktförmige Stelle zu stützen.

2. Aufpumpvorrichtung (30) eines Reifenmantels (20) für die Durchführung des Verfahrens nach Anspruch 1, wobei die genannte Vorrichtung (30) eine Glocke (32) aufweist, die dazu bestimmt ist, mit Druckluft gespeist zu werden, und von einem festen Teil (34) und einem beweglichen Teil (35) gebildet ist, der vorgesehen ist, um gegenüber dem vorausgehenden verschoben zu werden, und die genannten Teile (34 und 35) jeweils dazu bestimmt sind, die Flanken (25 und 26) des genannten Mantels (20), der mit der genannten Felge (10) versehen ist, zum Aufpumpen dicht einzuklemmen,
**dadurch gekennzeichnet, daß** sie im Inneren der genannten Glocke (32) einen Finger (33a) aufweist, der dazu bestimmt ist, punktuell eine axiale Kraft auf den genannten, ersten Wulst (21) mittels seines freien Endes aufzubringen, um eine Aufpumpöffnung zwischen dem genannten ersten Wulst (21) und dem genannten ersten Felgensitz (13) zu bilden.

3. Aufpumpvorrichtung (30) nach Anspruch 2, **dadurch gekennzeichnet, daß** der genannte Finger (33a) beweglich auf der Seite des genannten, festen Teils (34) und translationsbeweglich parallel zur Achse der Verschiebebewegung (X'X) des genannten beweglichen Teils (35) unter Steuerung eines Steuerelements (33b) angebracht ist, wie etwa eines Zylinders bzw. Stellgliedes.

4. Aufpumpvorrichtung (30) nach Anspruch 3, **dadurch gekennzeichnet, daß** der genannte Finger (33a), gegenüber seinem freien Ende zurückgesetzt, eine Schulterausbildung (33c) aufweist, die dazu bestimmt ist, auf die Außenfläche des genannten, sich in Umfangsrichtung erstreckenden Vorsprungs (12) der Felge (10) zur drücken, so daß die maximale Amplitude der genannten Translationsbewegung vorbestimmt ist.

5. Aufpumpvorrichtung (30) nach einem der Ansprüche 2 bis 4, **dadurch gekennzeichnet, daß** der genannte, feste Teil (34) eine Rotationsgeometrie aufweist, die konzentrisch zur Achse (X'X) der Verschiebebewegung des genannten, beweglichen Teils (35) ist, und daß er dazu bestimmt ist, durch seinen Umfangsrand (34b) auf eine kreisförmige Zone der genannten Flanke (25) zu drücken.

6. Aufpumpvorrichtung (30) nach Anspruch 5, **dadurch gekennzeichnet, daß** der genannte Umfangsrand (34b) des genannten, festen Teils (34) auf einem Bogen seines Umfangs einen Abschnitt (34ba) aufweist, der den genannten Rand (34b) durch Absätze (34bc) über den Rest des genannten Umfangs hinaus in Richtung des genannten, beweglichen Teils (35) leicht verlängert.

7. Aufpumpvorrichtung (30) nach Anspruch 6, **dadurch gekennzeichnet, daß** der genannte Finger (33a) in einem Winkelsektor vorgesehen ist, der begrenzt ist durch ein Dieder, das als Kante die genannte Achse (X'X) hat und dessen Flächen jeweils durch die genannten Absätze (34bc) verlaufen.

8. Aufpumpvorrichtung (30) nach einem der Ansprüche 2 bis 7, **dadurch gekennzeichnet, daß** der genannte, bewegliche Teil (35) mit zwei ringförmigen und konzentrischen Beilagen (37 und 38) versehen ist, die dazu bestimmt sind, auf die Felge (10) bzw. auf den Mantel (20) zu drücken.

9. Aufpumpvorrichtung (30) nach einem der Ansprüche 2 bis 8, **dadurch gekennzeichnet, daß** sie im Inneren der genannten Glocke (32) eine Montagerolle (39) aufweist, die dazu bestimmt ist, über mindestens einen Bogen des Umfangs des genannten ersten Wulstes (21) am Abschluß des genannten Aufpumpvorganges anzudrücken, um ihn auf dem genannten, ersten Sitz (13) zu montieren.

10. Aufpumpvorrichtung (30) nach Anspruch 9, **dadurch gekennzeichnet, daß** die genannte Montagerolle (39) am freien Ende eines Armes (39a) angebracht ist, der zur ebenen Drehung um die genannte Achse (X'X) in verschiedenen Höhen bezüglich der genannten Achse (X'X) beweglich ist.
